# EUROPÄISCHE PATENTSCHRIFT

(11) **EP 0 877 156 B1**
(45) Veröffentlichungstag und Bekanntmachung des Hinweises auf die Patenterteilung: **31.05.2006**
(21) Anmeldenummer: 98810290.1
(22) Anmeldetag: 06.04.1998
(51) Int. Cl.: F02C 7/224, F02C 3/28, F23R 3/30, F23R 3/36

(54) **Verfahren und Vorrichtung zum Betreiben der Brennkammer einer Gasturbinenanlage mit Flüssigbrennstoff**
Method and device to vaporize liquid fuel for use in a gas turbine combustor
Méthode et dispositif de vaporisation de carburant liquide pour son utilisation dans la chambre de combustion d'une turbine à gaz

(30) Priorität: 09.05.1997 DE 19719197
(43) Veröffentlichungstag der Anmeldung: 11.11.1998
(73) Patentinhaber: Alstom Technology Ltd, 5400 Baden (CH)
(72) Erfinder: Döbbeling, Klaus, Dr., 5210 Windisch (CH); Reh, Lothar, Prof. Dr., 8126 Zumikon (CH); Wang, Yunhogn, 8006 Zürich (CH)

(56) Entgegenhaltungen:
- EP-A- 0 691 512
- FR-A- 1 141 270
- US-A- 2 542 953
- US-A- 2 792 058
- US-A- 4 025 282
- US-A- 4 838 029

## Beschreibung

### Technisches Gebiet

Die Erfindung betrifft eine Verfahren und eine Vorrichtung zum Betreiben der Brennkammer einer Gasturbinenanlage mit Flüssigbrennstoff.

### Stand der Technik

In neueren Brennkammern von Gasturbinenanlagen werden magere Vormischbrenner eingesetzt, die besonders niedrige Schadstoffemissionen beim Betrieb mit gasförmigen Brennstoffen, wie beispielsweise Erdgas oder Methan, aufweisen. Ein solcher, als Doppelkegelbrenner bezeichneter Brenner ist aus der EP-B1 03 21 809 bekannt. Dieser entweder mit gasförmigen oder mit flüssigen Brennstoffen zu betreibende Doppelkegelbrenner weist für beide Brennstoffarten separate Brennstoffleitungen auf. Zudem ist für den flüssigen Brennstoff eine Zerstäuberdüse erforderlich. Wegen seiner Auslegung für beide Brennstoffarten ist der Doppelkegelbrenner somit grösser ausgebildet und mit mehr Bauteilen versehen, als das beim Betrieb mit nur einer Brennstoffart erforderlich wäre.

Bei bisher bekannten Verfahren und Vorrichtungen zur Brennstoffversorgung einer mit flüssigen Brennstoffen, wie beispielsweise Dieselöl oder Heizöl extraleicht, betriebenen Brennkammer erfolgen die Verdampfung des Brennstoffs sowie die Mischung von Brennstoffdampf und Verbrennungsluft innerhalb der Brenner bzw. der Brennkammer. Die verdampfenden Brennstofftropfen führen zu niedrigen Temperaturen am Tropfen und in Tropfennähe. Zudem kommt es durch den ausdampfenden Brennstoff an den Tropfenoberflächen zu inhomogenen Temperatur- und Konzentrationsfeldern im Verbrennungsraum. Dadurch tritt im Brennraum eine breite, schwer zu kontrollierende Verteilung von lokalen Verbrennungstemperaturen und Luftverhältnissen auf, was selbst bei Einstellung einer mittleren Stöchiometrie der Verbrennungspartner nicht verhindert werden kann. Weil jedoch die Stickoxidbildung bei hohen Temperaturen sehr schnell verläuft, die Zersetzungsreaktionen von Stickoxiden dagegen sehr viel langsamer sind, führen inhomogene Temperatur- und Konzentrationsfelder zu einer erhöhten Stickoxidbildung. Zusammenfassend kann somit gesagt werden, dass die Verbrennung flüssiger Brennstoffe aufgrund der dabei räumlich und zeitlich teilweise parallel ablaufenden Verdampfungs- und Mischungsvorgänge, häufig keine zufriedenstellend niedrigen NOₓ-Werte zur Folge hat.

Um diesen Nachteil zu beheben wurden, gemäss Förster, S.: "Umweltfreundlicher Öldampf-Motor", in "Berichte des Forschungszentrums Jülich", Nr. 2564, ISSN 0366-0885, S. 1 - 4, Rohre mit kleinem Durchmesser als separate Öl-Verdampfungselemente im Abgaspfad eines Motors montiert. Diese Lösung benötigt jedoch sehr hohe Wasserzugaben im Bereich von 2-5 kg Wasser je kg Öl, um Ablagerungen an den Innenwänden und damit ein Verstopfen der Rohre zu verhindern. Wegen der hohen Wasserzugaben und den damit verbundenen Wirkungsgradverlusten ist jedoch der Einsatz solcher Verdampfungselemente für die Verbrennung flüssiger Brennstoffe in Gasturbinenanlagen nicht möglich.

Schliesslich ist aus der US-A-4025282 ein Verfahren zur wahlweisen Verbrennung von gasförmigen oder flüssigen Brennstoffen bekannt, bei dem im Falle der Verbrennung von Flüssigbrennstoff dessen Verdampfung räumlich und zeitlich getrennt von der Vermischung des Brennstoffdampfs mit der Verbrennungsluft erfolgt. Dazu wird der Flüssigbrennstoff stromauf der Brenner zunächst in einem Zerstäuber unter Zugabe von Wasserdampf in kleinste Flüssigbrennstofftröpfchen vernebelt. In einem nachfolgenden Erhitzer erfolgt dann unter weiterer Wärmezugabe die Verdampfung der Flüssigbrennstofftröpfchen, so dass den Brennern ein Wasserdampf-Flüssigbrennstoffdampf-Gemisch zur Verfügung gestellt werden kann.

### Darstellung der Erfindung

Die Erfindung versucht, alle diese Nachteile zu vermeiden. Ihr liegt die Aufgabe zugrunde, ein Verfahren zum Betreiben der Brennkammer einer Gasturbinenanlage mit Flüssigbrennstoff zu schaffen, mit dem die NOₓ-Werte auch bei Verwendung von billigerem Flüssigbrennstoff ähnlich denen beim Einsatz von gasförmigen Brennstoffen sind. Dabei soll die Grösse der Brenner, trotz alternativer

Verwendungsmöglichkeit von flüssigen und gasförmigen Brennstoffen, verringert werden. Zudem ist es Aufgabe der Erfindung, eine entsprechende Vorrichtung zur Durchführung des Verfahrens zu schaffen.

Erfindungsgemäss wird dies durch ein Verfahren gemäss Anspruch erreicht.

Weil der ursprüngliche Flüssigbrennstoff durch seine Verdampfung im stromauf angeordneten Verdampfungsreaktor bereits bei seinem Eintritt in die Brenner bzw. in die Brennkammer gasförmig ist, entfällt die Notwendigkeit der Brennstoffverdampfung an dieser Stelle. Beim Eintritt in die Brenner muss daher nur noch die Mischung des Brennstoffes mit der Verbrennungsluft realisiert werden, weshalb die eigentliche Verbrennung des vorgemischten Brennstoffdampf/Luft-Gemisches in der Brennkammer wesentlich schneller und unter geringerem Energiebedarf ablaufen kann. Zudem lässt sich die Luftzahl bei der Verbrennung von aufbereitetem Flüssigbrennstoffdampf aufgrund der hohen Flammenlöschgrenze in einem Bereich von 2 bis 3,5 variieren. Damit findet die Verbrennung bei einem hohem Luftüberschuss statt, so dass der gesamte Flüssigbrennstoff verbrannt werden kann. Auf diese Weise können auch bei Verwendung von Flüssigbrennstoffen, wie Heizöl extraleicht oder anderen leichter siedenden Fraktionen des Erdöls, ähnlich niedrige Schadstoffemissionen wie bei der Verbrennung von Erdgas erzielt werden.

Beim mittelbaren Wärmetauschwind eine Temperatur von ≥ 250°C eingestellt und zudem Sauerstoff zugeführt. Auf diese Weise kommt es neben der Verdampfung zu einer thermischen Spaltung des Flüssigbrennstoffs in leichtere Kohlenwasserstoff-Fraktionen und zu einer Umwandlung von gesättigten in ungesättigte Kohlenwasserstoffe. Zusätzlich kann der mittelbare Wärmetausch des verbleibenden Rests des Flüssigbrennstoffs im Beisein eines Katalysators erfolgen, wobei insbesondere ein Katalysator auf Nickelbasis eingesetzt wird. Dazu besitzt der Verdränger des Verdampfungsreaktors entweder eine katalytisch wirksame Oberflächenschicht oder er ist vollständig aus einem katalytisch wirksamen Material gefertigt. Somit werden die Verdampfung und die Spaltung des Flüssigbrennstoffs durch eine katalytische Teilspaltung unterstützt.

Da das Verdampfen des Flüssigbrennstoffs, das Spalten der Kohlenwasserstoffe und auch die Umwandlung von gesättigten in ungesättigte Kohlenwasserstoffe endotherme Reaktionen darstellen, wird die dazu benötigte Energie dem zweiten Wärmetauschmedium entzogen. Diese Energie wird bei der anschliessenden Verbrennung in der Brennkammer wieder frei, so dass ein verbesserter Wirkungsgrad der Gasturbine die Folge ist. Zudem wird die Reaktionsgeschwindigkeit des Brennstoffdampf/Luft-Gemisches aufgrund der gespaltenen und ungesättigten Kohlenwasserstoffe erhöht und damit gegenüber Erdgas ein breiterer Betriebsbereich bis hin zu höheren Luftüberschüssen ermöglicht.

Der Sauerstoff wird in Form von vorkomprimierter, heisser Verdichterluft und noch vor dem unmittelbaren Wärmetausch, d.h. stromauf des Verdampfungsreaktors, in das erste Wärmetauschmedium eingeführt. Die eingesetzte Luftmenge beträgt bis zu 10%, vorzugsweise jedoch 1-5%, der für eine stöchiometrische Verbrennungsreaktion benötigten Menge. Die Zugabe einer solchen, relativ kleinen Luftmenge führt zu exothermen Teilreaktionen im Brennstoffdampf-Flüssigbrennstoff-Gemisch, so dass dessen Temperaturniveau aufgrund zusätzlicher Wärmefreisetzung erhöht werden kann. Wegen der bereits stromauf des Verdampfungsreaktors erfolgenden Luftzugabe kommt es zu einer gleichmässigen Luftverteilung, wodurch die Spaltreaktionen im Verdampfungsreaktor ebenfalls gleichmässig ablaufen.

Durch Betätigung eines in einer entsprechenden Luftleitung angeordneten Regelventils lässt sich die Menge an zugeführter Luft in Abhängigkeit vom Lastzustand der Gasturbinenanlage relativ schnell regeln. Neben einer verbesserten Verdampfung des restlichen Flüssigbrennstoffs im Verdampfungsreaktor wird dadurch auch die Kondensationsneigung des erzeugten Brennstoffdampfs wesentlich verringert. Infolge der Anwesenheit des Wasserdampfs wird eine Russbildung praktisch verhindert. Zur Minimierung von Wärmeverlusten ist der Verdampfungsreaktor isoliert.

Zur Realisierurig des Verfahrens ist stromauf der Mischstrecke der Brennkammer ein mit dieser verbundener Verdampfungsreaktor senkrecht angeordnet, welcher eingangsseitig eine sowohl mit einer Flüssigbrennstoffleitung als auch mit einer Zuleitung für ein erstes Wärmetauschmedium verbundene Zweistoffdüse aufnimmt. Die Zweistoffdüse besteht aus einem rohrartigen Innenkörper und einem den Innenkörper umschliessenden Aussenmantel. Zwischen dem Innenkörper sowie dem Aussenmantel ist ein Ringspalt ausgebildet. Der Innenkörper weist einen zentralen Flüssigbrennstoffkanal auf und geht stromab in einen Verteilkörper über. Letzterer nimmt mehrere radial ausgerichtete, mit dem Flüssigbrennstoffkanal verbundene sowie in den Ringspalt mündende Verteilbohrungen auf. Zwischen dem Anschlussstück sowie dem Verteilkörper ist eine den Innenkörper umschliessende Isolierhülse befestigt und durch einen Isolierspalt vom Innenkörper getrennt. Der Aussenmantel weist stromauf eine seitliche Ausnehmung für die Zuleitung des ersten Wärmetauschmediums und stromab einen Düsenkopf mit einer zentralen, sich hohlkegelförmig erweiternden, mit dem Ringspalt verbundenen Austrittsöffnung zum Verdampfungsreaktor auf.

Beim Betrieb der Anlage tritt der Flüssigbrennstoff zentral in die Zweistoffdüse des Verdampfungsreaktors ein und wird durch den Innenkörper stromab geführt. Im Verteilkörper wird der Flüssigbrennstoff radial nach aussen in den Ringspalt und damit in das erste Wärmetauschmedium eingeleitet. Die Isolierhülse und der Isolierspalt verhindern eine vorzeitige zu starke Erhitzung über den Verdampfungspunkt des Flüssigbrennstoffs, welche zu Spaltreaktionen und damit zu Ablagerungen an der Innenwand des Innenkörpers führen könnte. Das Wärmetauschmedium zerteilt den Flüssigkeitsfilm und reisst die Brennstofftröpfchen bis zur Austrittsöffnung der Zweistoffdüse mit. Aufgrund der sich hohlkegelförmig erweiternden Austrittsöffnung tritt dass in der Zweistoffdüse entstandene Brennstoffdampf-Flüssigbrennstoff-Gemisch mit einer im Bereich lokaler Schallgeschwindigkeit liegenden Geschwindigkeit, fein zerstäubt bzw. teilverdampft in den Verdampfungsreaktor ein. Dadurch wird die Neigung zur Ablagerung von Brennstofftröpfchen im Inneren der Zweistoffdüse deutlich verringert.

Das erste Wärmetauschmedium wird in einem Massenverhältnis zum Flüssigbrennstoff von 0,3-1:1, vorzugsweise in einem Verhältnis von 0,5:1 zugegeben, während im Verdampfungsreaktor ein Druck von 12 - 40 bar, vorzugsweise von 20 - 30 bar, sowie eine Temperatur von mehr als 100 °C über der Siedeendtemperatur des Flüssigbrennstoffs aufrechterhalten wird. Durch die Verdüsung mit einer solchen, relativ kleinen Menge überhitzten Wasserdampfs kann der Brennstoffpartialdruck abgesenkt und damit die Verdampfungstemperatur auch bei diesen hohen Drücken in einem Temperaturniveau gehalten werden , bei dem der Wärmeaustausch des Flüssigbrennstoffs mit dem 500 - 650 °C heissen, zweiten Wärmetauschmedium optimal abläuft. Dabei findet in und kurz nach der Zweistoffdüse ein schlagartiger Wärmetausch zwischen den beteiligten Medien statt, infolgedessen bereits beim Zerstäubungsvorgang am Eintritt des Verdampfungsreaktors bis zu zwei Drittel des Flüssigbrennstoffs schlagartig in die gasförmige Phase überführt werden. Nach dem Eindüsen wird das gebildete Brennstoffdampf-Flüssigbrennstoff-Gemisch mit einer hohen Strömungsgeschwindigkeit durch den Verdampfungsreaktor geleitet, wobei die Verweilzeit im Verdampfungsreaktor bis zu 30 Sekunden und minimal 1 Sekunde beträgt. Auf diese Weise kann auch der im Brennstoffdampf-Flüssigbrennstoff-Gemisch noch verbliebene Flüssigbrennstoff im mittelbaren Wärmetausch mit heissen Prozessabgasen der Gasturbinenanlage restlos verdampft werden. Dabei wird die Anreicherung von Flüssigbrennstoffresten in Strömungstoträumen des Verdampfungsreaktors durch dessen senkrechte Anordnung verhindert.

Der Verdampfungsreaktor wird von einem Verdränger, einem berippten Druckkörper sowie einem Mantelrohr gebildet. Er weist ein Befestigungselement für die Zweistoffdüse, eine Zu- und eine Ableitung für ein zweites Wärmetauschmedium und eine Drossel zur Druckreduzierung des resultierenden Brennstoffdampfs auf. Die Zu- und die Ableitung für das zweite Wärmetauschmedium sind mit einem zwischen dem Mantelrohr und dem Druckkörper ausgebildeten Ringkanal verbunden. Auf dem Umfang des Verdrängers, d.h. zwischen diesem und dem Druckkörper, sind jeweils mehrere Verdampferkanäle für das Brennstoffdampf-Flüssigbrennstoff-Gemisch ausgebildet und im wesentlichen parallel zum Ringkanal für das zweite Wärmetauschmedium angeordnet.

Das erste Wärmetauschmedium besteht aus überhitztem Wasserdampf und das zweite Wärmetauschmedium aus einem heissen Prozessgas der Gasturbinenanlage, vorzugsweise aus deren Abgas. Besonders vorteilhaft werden der überhitzte Wasserdampf von einem mit der Gasturbinenanlage verbundenen Dampferzeuger zugeführt und die Abgase der Brennkammer bzw. einer mit ihr verbundenen Gasturbine eingesetzt. Damit finden im Arbeitsprozess der Gasturbinenanlage ohnehin vorhandene Zwischenprodukte Verwendung, weshalb keine externen Quellen für die Bereitstellung der Wärmetauschmedien erforderlich sind.

Um in der Zweistoffdüse eine verbesserte Vermischung des überhitzten Wasserdampfs mit dem Flüssigbrennstoff und damit bereits an dieser Stelle einen grösseren Prozentsatz an Brennstoffdampf zu erreichen, wird der Flüssigbrennstoff zumindest annähernd senkrecht in den Wasserdampf eingeleitet. Das dabei entstandene Brennstoffdampf-Flüssigbrennstoff-Gemisch wird beschleunigt und, wie bereits oben beschrieben, mit lokaler Schallgeschwindigkeit in den Verdampfungsreaktor eingedüst. Auf diese Weise kann eine Flüssigkeitsanreicherung und damit auch die Kohlenstoffbildung im Inneren der Zweistoffdüse wirksam verhindert werden. Dazu münden die Verteilbohrungen zumindest annähernd senkrecht in den sich stromab stetig verengenden Ringkanal der Zweistoffdüse. Die an den Ringspalt anschliessende Austrittsöffnung ist lavaldüsenförmig ausgebildet. Zudem sind auf dem Verteükörper mehrere tangentiale Drallrillen angeordnet, welche dem Brennstoffdampf-Flüssigbrennstoff-Gemisch noch vor dem Eindüsen in den Verdampfungsreaktor eine tangentiale Geschwindigkeitskomponente aufprägen. Dadurch wird ebenfalls die Vermischung des Wasserdampfs mit dem Flüssigbrennstoff verbessert und eine zusätzliche Scherwirkung in der Strömung erzeugt. Ausserdem ist im Druckkörper des Verdampfungsreaktors eine Rezirkulationshülse angeordnet, welche zumindest den Einspritzbereich der Zweistoffdüse abdeckt. Damit werden in diesem Bereich Rezirkulationen des Brennstoffdampf-Flüssigbrennstoff-Gemischs hervorgerufen, wodurch der Verdampfungsvorgang weiter beschleunigt werden kann.

Besonders vorteilhaft ist zwischen dem Verdampfungsreaktor und der Brennkammer eine Verbindungsleitung mit einem ersten Absperrventil angeordnet. Stromab des Absperrventils mündet eine ein zweites Absperrventil aufweisende Gasleitung in die Verbindungsleitung. Damit kann beim Betrieb der Gasturbinenanlage entsprechend Bedarf auf Flüssigbrennstoff oder gasförmigen Brennstoff umgestellt werden. Weil jedoch, unabhängig vom verwendeten Brennstoff, stets nur gasförmige Medien in die Brenner bzw. die Brennkammer eingeführt werden, ist für beide Brennstoffarten nur ein einziges Verteil- und Injektionssystem erforderlich. Die bei konventionellen Dualbrennern in der Brennkammer angeordneten Flüssigbrennstoff- und Wasserleitungen sowie die Flüssigbrennstoffdüsen können somit entfallen, was eine wesentliche Platz- und Kostenersparnis darstellt.

### Kurze Beschreibung der Zeichnung

In der Zeichnung sind mehrere Ausführungsbeispiele der Erfindung anhand einer Gasturbinenanlage mit einer stromauf angeordneten Vorrichtung zur Verdampfung von flüssigem Brennstoff dargestellt.

Es zeigen:
- Fig. 1: eine schematische Darstellung der Gasturbinenanlage und der Verdampfungsvorrichtung;
- Fig. 2: einen Längsschnitt durch die Verdampfungsvorrichtung entsprechend Fig. 1, vergrössert dargestellt;
- Fig. 3: einen Längsschnitt durch die Zweistoffdüse, gegenüber Fig. 2 nochmals vergrössert dargestellt;
- Fig. 4: eine Darstellung der im Inneren der Düse ausgebildeten Drallrillen;
- Fig. 5: einen Querschnitt durch die Verdampfungsvorrichtung entlang der Linie V-V in Fig. 2, vergrössert dargestellt;
- Fig. 6: eine vergrösserte Darstellung der Fig. 5, im Bereich der Verdampferkanäle;
- Fig. 7: eine Darstellung der Düse entsprechend Fig. 3, jedoch mit veränderter Austrittsöffnung.

Es sind nur die für das Verständnis der Erfindung wesentlichen Elemente gezeigt. Nicht dargestellt ist beispielsweise die mit der Gasturbinenanlage verbundene Dampfturbine. Die Strömungsrichtung der Arbeitsmittel ist mit Pfeilen bezeichnet.

### Weg zur Ausführung der Erfindung

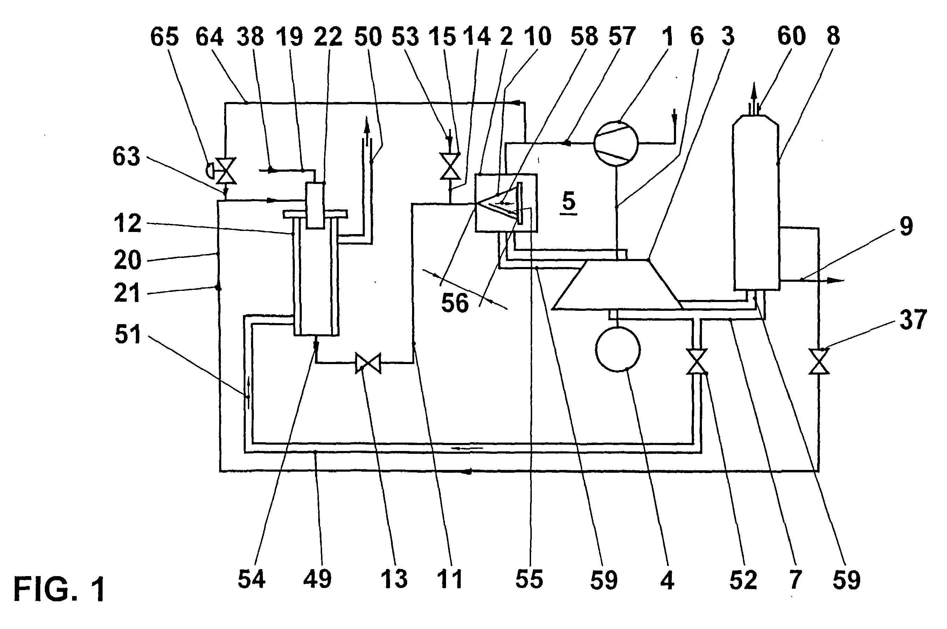

In Figur 1 ist ein aus einem Verdichter 1, einer Brennkammer 2, einer Gasturbine 3 und einem Generator 4 bestehende Gasturbinenanlage 5 schematisch dargestellt. Sowohl der Verdichter 1, die Gasturbine 3 als auch der Generator 4 sind auf einer gemeinsamen Welle 6 angeordnet. Abgasseitig ist die Gasturbine 3 über eine Abgasleitung 7 mit einem als Abhitzekessel ausgebildeten Dampferzeuger 8 und dieser über eine Frischdampfleitung 9 mit einer nicht dargestellten Dampfturbine verbunden.

Die Brennkammer 2 ist mit einer Anzahl von Brennern 10 bestückt, die im wesentlichen wie die aus der EP-B1 03 21 809 bekannten Doppelkegelbrenner ausgebildet sind, jedoch weder Flüssigbrennstoffleitungen noch eine Flüssigbrennstoffdüse aufweisen. Natürlich können auch Vormischbrenner mit ähnlicher Funktion eingesetzt werden. Die Doppelkegelbrenner 10 sind stromauf über eine Verbindungsleitung 11 an einem Verdampfungsreaktor 12 angeschlossen. In der Verbindungsleitung 11 ist ein erstes Absperrventil 13 angeordnet. Stromab des ersten Absperrventils 13, d.h. zwischen letzterem und der Brennkammer 2, mündet eine als Erdgasleitung ausgebildete Gasleitung 14 in die Verbindungsleitung 11. Die Erdgasleitung 14 weist ein zweites Absperrventil 15 auf. Natürlich kann die Gasturbinenanlage 5 auch ohne die Erdgasleitung 14 oder mit anderen geeigneten Brennern 10 betrieben werden. Ausserdem ist es möglich nicht nur einen Verdampfungsreaktor 12 für die Brennkammer 2 vorzusehen, sondern jeden Brenner 10 oder zumindest jede Gruppe von Brennern 10 mit einem Verdampfungsreaktor 12 zu verbinden.

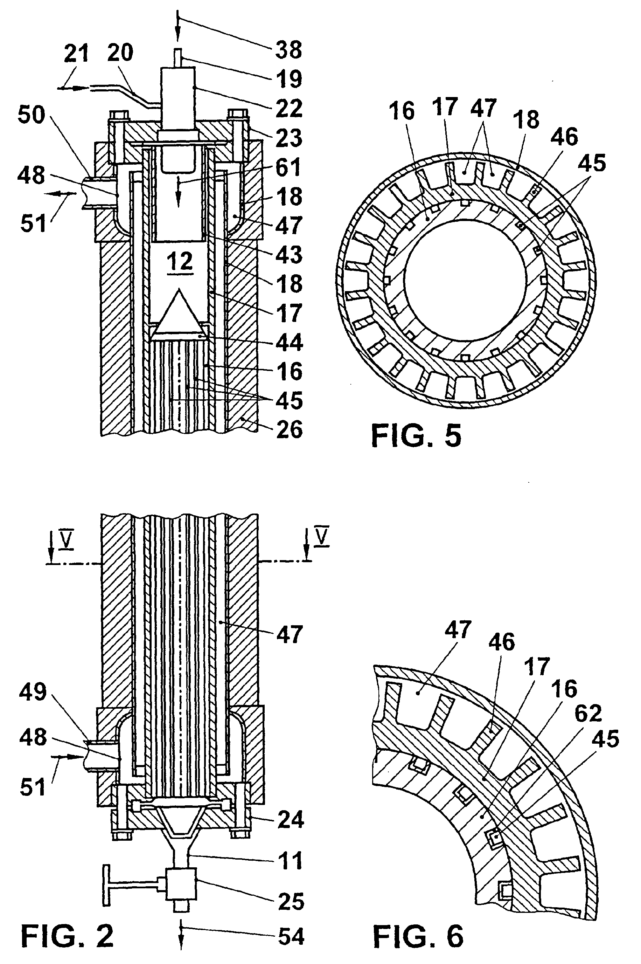

Der senkrecht angeordnete Verdampfungsreaktor 12 besteht aus einem Verdränger 16, einem Druckkörper 17 sowie einem Mantelrohr 18. Eingangsseitig nimmt der Verdampfungsreaktor 12 eine sowohl mit einer Flüssigbrennstoffleitung 19 als auch mit einer Zuleitung 20 für ein erstes Wärmetauschmedium 21 verbundene Zweistoffdüse 22 auf. Dazu besitzt er ein als Flansch ausgebildetes erstes Befestigungselement 23. Ausgangsseitig weist der Verdampfungsreaktor 12 ein im wesentlichen analog dem ersten ausgebildetes, zweites Befestigungselement 24 auf, an welchem eine Drossel 25 und die Verbindungsleitung 11 anschliessen. Der Verdampfungsreaktor 12 ist mit einem aus Faserkeramik bestehenden Isolationsmantel 26 überzogen (Fig. 2).

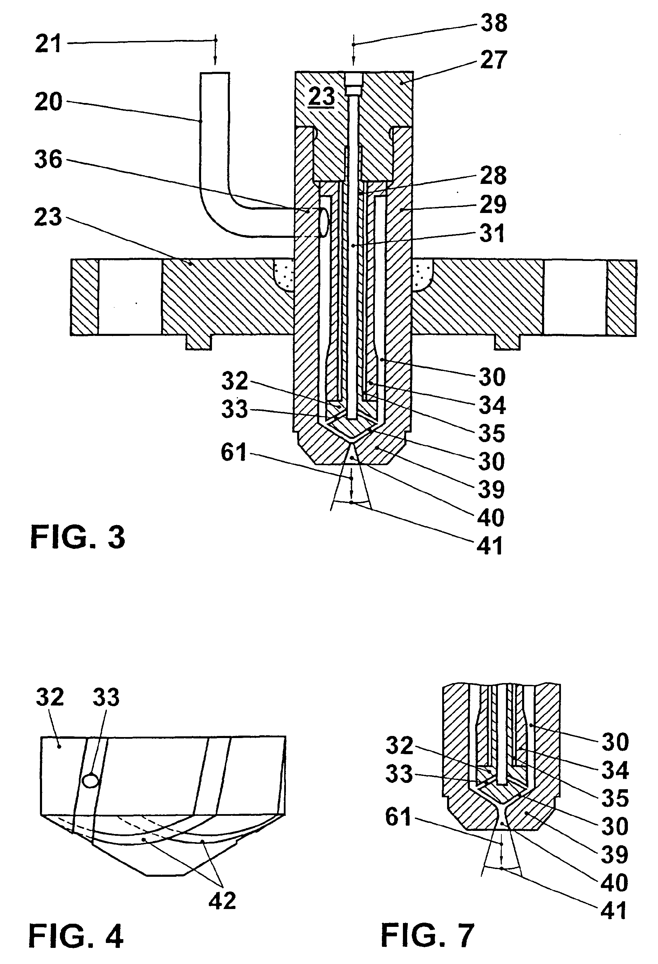

Die Zweistoffdüse 22 besteht aus einem Anschlussstück 27, einem rohrartigen Innenkörper 28 sowie aus einem den Innenkörper 28 umschliessenden Aussenmantel 29. Zwischen dem Innenkörper 28 sowie dem Aussenmantel 29 ist ein sich stromab stetig verengender Ringspalt 30 ausgebildet. Der Innenkörper 28 besitzt einen zentralen Flüssigbrennstoffkanal 31 und geht weiter stromab in einen Verteilkörper 32 über. Der Verteilkörper 32 nimmt mehrere radial ausgerichtete, mit dem Flüssigbrennstoffkanal 31 verbundene sowie annähernd senkrecht in den sich stromab stetig verengenden Ringspalt 30 mündende Verteilbohrungen 33 auf. Zwischen dem Anschlussstück 27 sowie dem Verteilkörper 32 ist eine den Innenkörper 28 umschliessende und aus Keramik bestehende Isolierhülse 34 befestigt. Diese Keramikhülse 34 ist vom Innenkörper 28 durch einen Isolierspalt 35 getrennt (Fig. 3).

Der Aussenmantel 29 der Zweistoffdüse 22 weist stromauf eine seitliche Ausnehmung 36 für die mit dem Abhitzekessel 8 verbundene Zuleitung 20 auf. Durch diese mit einem dritten Absperrventil 37 versehene Zuleitung 20 wird dem Flüssigbrennstoff 38 als erstes Wärmetauschmedium 21 überhitzter Wasserdampf aus dem Abhitzekessel 8 zugeführt (Fig. 1). Ebenso können andere geeignete Fluide, wie beispielsweise über 500°C heisser Stickstoff, als erstes Wärmetauschmedium 21 Verwendung finden. An seinem stromabwärtigen Ende geht der Aussenmantel 29 in einen Düsenkopf 39 über, welcher eine zentrale, sich hohlkegelförmig erweiternde und mit dem Ringspalt 30 verbundene Austrittsöffnung 40 zum Verdampfungsreaktor 12 besitzt. Dabei definiert die Austrittsöffnung 40 einen Öffnungswinkel 41 von etwa 20° (Fig. 3). Zudem sind auf der äusseren Oberfläche des Verteilkörpers 32, d.h. im Ringspalt 30 zwischen dem Düsenkopf 39 und dem Verteilkörper 32, mehrere tangentiale Drallrillen 42 ausgebildet (Fig. 4).

Eingangsseitig ist im Druckkörper 17 des Verdampfungsreaktors 12 eine Rezirkulationshülse 43 befestigt, welche zumindest den Einspritzbereich der Zweistoffdüse 22 abdeckt. Daran anschliessend ist ein mit dem Verdränger 16 verbundener Leitkegel 44 angeordnet (Fig. 2). Auf dem Umfang des Verdrängers 16, d.h. zwischen letzterem und dem Druckkörper 17 sind mehrere Verdampferkanäle 45 ausgeformt. Der vom Mantelrohr 18 beabstandete Druckkörper 17 besitzt nach aussen gerichtete Rippen 46. Zwischen dem Mantelrohr 18 und dem Druckkörper 17 sowie seinen Rippen 46 ist ein Ringkanal 47 ausgebildet (Fig. 5). Sowohl in seinem unteren als auch im oberen Bereich weist das Mantelrohr 18 eine Öffnung 48 für eine Zuführleitung 49 bzw. für eine Abführleitung 50 eines zweiten Wärmetauschmediums 51 auf. Die mit einem vierten Absperrventil 52 versehene Zuführleitung 49 zweigt stromauf des Abhitzekessels 8 von der Abgasleitung 7 ab, so dass als zweites Wärmetauschmedium 51 Abgas aus der Gasturbine 3 Verwendung findet (Fig. 1). Ebenso ist jedes andere heisse Inertgas mit einer Temperatur von über 550 °C als zweites Wärmetauschmedium 51 geeignet, beispielsweise heisse Verbrennungsluft. Demgegenüber ist die Abführleitung 50 mit einem nicht dargestellten Kamin verbunden.

Je nachdem, ob das in der Verbindungsleitung 11 oder das in der Erdgasleitung 14 angeordnete Absperrventil 13, 15 geöffnet ist, kann die Gasturbinenanlage 5 entweder mit als Flüssigbrennstoff 38 verwendetem Brennöl oder mit Erdgas 53 betrieben werden. Den Doppelkegelbrennern 10 wird aber in jedem Fall ein gasförmiger Brennstoff zugeführt. Dabei handelt es sich entweder um das aus der Gasleitung 14 zuströmende Erdgas 53 oder um in der Zweistoffdüse 22 bzw. im Verdampfungsreaktor 12 aus dem Brennöl 38 hergestellten Brennstoffdampf 54. Ausser dem Brennöl 38 können natürlich auch andere Flüssigbrennstoffe mit Siedetemperaturen ≤450°C Verwendung finden. Flüssigbrennstoffe 38 mit höheren Siedetemperaturen werden wegen der damit verbundenen Verkokungsgefahr nicht eingesetzt.

In den Doppelkegelbrennern 10 erfolgt über in Figur 1 nur schematisch angedeutete, tangentiale Lufteintrittschlitze 55 entlang einer Mischstecke 56 die Einmischung von Verbrennungsluft 57, welche zuvor im Verdichter 1 aus Umgebungsluft komprimiert wurde. Dabei bildet sich ein Brenngemisch 58, welches in der Brennkammer 2 verbrannt wird. Bei der Verbrennung entstehen Rauchgase 59, die in die Gasturbine 3 eingeleitet und in ihr entspannt werden. Dadurch werden gleichzeitig der auf einer Welle 6 mit der Gasturbine 3 angeordnete Verdichter 1 und der Generator 4 angetrieben, letzterer zwecks Stromerzeugung. Die entspannten, noch heissen Rauchgase 59 werden über die Abgasleitung 7 in den Abhitzekessel 8 eingeleitet und dort zur Erzeugung von überhitztem Dampf genutzt. Dieser Dampf wird über die Frischdampfleitung 9 der nicht dargestellten Dampfturbine zugeführt. Danach werden die Rauchgase 59 von einen Kamin 60 an die Umgebung abgegeben. Bei Verwendung von Erdgas 53 sind die in der Verbindungsleitung 11, der Zuleitung 20 und in der Zuführleitung 49 angeordneten Absperrventile 13, 37, 52 geschlossen.

Soll dagegen Brennöl 38 zum Betrieb der Gasturbinenanlage 5 eingesetzt werden, so sind die Absperrventile 13, 37, 52 geöffnet und die Zufuhr von Erdgas 53 wird durch Schliessen des in der Gasleitung 14 angeordneten, zweiten Absperrventils 15 unterbunden. In diesem Fall wird aus dem Abhitzekessel 8 überhitzter Wasserdampf 21 in einem Massenverhältnis von 0,5:1 kg/kg verwendetes Brennöl 38 entnommen und über die Zuleitung 20 mit einem Druck von etwa 30 bar und mit einer Temperatur von etwa 500 - 650°C, d.h. mehr als 100 °C über der Siedeendtemperatur des Brennöls 38, zur Zweistoffdüse 22 geführt.

Das Brennöl 38 gelangt über die Flüssigbrennstoffleitung 19 zur Zweistoffdüse 22. Zum Zwecke der Verbesserung der Zerstäubung, d.h. zur Verringerung seiner Viskosität kann das Brennöl 38 über eine nicht dargestellte Verbindungsleitung der Flüssigbrennstoffleitung 19 mit der Abführleitung 50 mit der Restwärme des zweiten Wärmetauschmediums 51 vorgewärmt werden. Im Inneren der Zweistoffdüse 22 wird das zentral eintretende Brennöl 38 infolge des Brennstoffdrucks im Flüssigbrennstoffkanal 31 stromab gefördert. In diesem Bereich verhindern die Keramikhülse 34 und der Isolierspalt 35 eine vorzeitige Erhitzung des Brennöls 38 durch Wärmeübergang vom überhitzten Wasserdampf 21. Auf diese Weise können Spaltreaktionen des Brennöls 38 und damit Ablagerungen an der Innenwand des Innenkörpers 28 vermieden werden (Fig. 3).

Schliesslich tritt das Brennöl 38 durch die Verteilbohrungen 33 nahezu senkrecht in den sich stetig verengenden und mit dem überhitzten Wasserdampf 21 gefüllten Ringspalt 30 ein. Dadurch kommt es zu einem schlagartigen Wärmeübergang vom Wasserdampf 21 auf das Brennöl 38, womit bereits ein grosser Teil des Brennöls 38 in die gasförmige Phase überführt wird. Zudem wird eine intensive Vermischung der beteiligten Medien zu einem Brennstoffdampf-Flüssigbrennstoff-Gemisch 61 erreicht, welche durch die tangentiale Drallrillen 42 noch verstärkt wird. Dabei dient der Wasserdampf 21 als Transport-, Zerstäubungs- und Verdampfungsmittel.

Natürlich kann auch der überhitzte Wasserdampf 21 zentral und das Brennöl 38 koaxial dazu in einer entsprechend ausgebildeten Zweistoffdüse 22 geführt werden. In diesem nicht dargestellten Fall sind keine Spaltreaktionen des Brennöls 38 zu befürchten, so dass die Notwendigkeit der Anordnung einer Keramikhülse 34 entfällt.

Aufgrund der sich hohlkegelförmig erweiternden Austrittsöffnung 40 tritt dass Brennstoffdampf-Flüssigbrennstoff-Gemisch 61 mit lokaler Schallgeschwindigkeit in den Druckkörper 17 des Verdampfungsreaktors 12 ein. Dadurch wird die Neigung zur Ablagerung von Brennstofftröpfchen im Inneren der Zweistoffdüse 22 und dort insbesondere im Bereich der Austrittsöffnung 40 deutlich verringert. Die im Einspritzbereich der Zweistoffdüse 22 im Druckkörper 17 angeordnete Rezirkulationshülse 43 ruft lokale Rezirkulationen des Brennstoffdampf-Flüssigbrennstoff-Gemischs 61 hervor, welche die Verdampfung des restlichen Brennöls 38 fördern.

Danach wird das Brennstoffdampf-Flüssigbrennstoff-Gemisch 61 über den Leitkegel 44 zu den Verdampferkänalen 45 geführt. Infolge mittelbaren Wärmetauschs mit den im Gegenstromprinzip durch den Ringkanal 47 strömenden Abgasen 51 der Gasturbine 3 findet in den Verdampferkänalen 45, d.h. im freien Raum, die Verdampfung des restlichen Brennöls 38 statt. Auf diese Weise kann auch das im Brennstoffdampf-Flüssigbrennstoff-Gemisch 61 noch verbliebene Brennöl 38 im mittelbaren Wärmetausch mit den Abgasen 51 der Gasturbine 3 restlos in Brennstoffdampf 54 umgewandelt werden. Dazu wird das Brennstoffdampf-Flüssigbrennstoff-Gemisch 61 nach dem Eindüsen in den Druckkörper 17 mit einer grossen Strömungsgeschwindigkeit durch den Verdampfungsreaktor 12 geleitet, wobei die Verweilzeit im Verdampfungsreaktor 12 zumindest 1 s beträgt.

Schliesslich wird der entstandene Brennstoffdampf 54 zur Verbrennung in die Brennkammer 2 weitergeleitet, wobei die Drossel 25 zur Druckreduzierung dient.

Zudem besitzt der Verdränger 16 eine katalytisch wirksame Oberflächenschicht 62, wofür ein Katalysator auf Nickelbasis Verwendung findet (Fig. 6). Damit wird der zweite Verdampfungsschritt des Brennöls 38 durch eine katalytische Teilspaltung unterstützt, weshalb sowohl die Bildung niedrigsiedender Kohlenwasserstoffe verstärkt als auch die Russbildung minimiert werden. Zum gleichen Zweck kann der Verdränger 16 auch vollständig aus einem kataytisch wirksamen Material gefertigt werden.

Natürlich kann der Verdampfungsreaktor 12 auch ohne einen Verdränger 16 und den mit diesem verbundenen Leitkegel 44 ausgebildet werden (nicht dargestellt). Damit ist, bei einem ausreichendem Wärmeübergang auf den Flüssigbrennstoff 38, eine Reduzierung der Abmessungen des Verdampfungsreaktors 12 möglich.

Der Isolationsmantel 26 minimiert die Wärmeverluste des gesamten Verdampfungsreaktors 12. Ebenso können die empfindlichsten Rohrleitungen mit handelsüblichen Isolationsmaterialien vor übermässigen Wärmeverlusten geschützt werden (nicht dargestellt).

Durch eine Variation der Dimension des eingebauten Verdrängers 16 können das Volumen des Verdampfungsreaktors 12 sowie die Verweilzeit und damit indirekt die Verdampfungsleistung beeinflusst werden. Selbstverständlich kann die Zufuhr der beiden eingesetzten Wärmetauschmedien 21, 51 auch von externen Quellen erfolgen (ebenfalls nicht dargestellt).

Die in einer nach dem beschriebenen Ausführungsbeispiel ausgebildeten Gasturbinenanlage 5 gemessenen Abgaswerte sind in folgender Tabelle den entsprechenden Abgaswerten einer Referenzanlage ohne Vorverdampfung des Brennöls 38 gegenübergestellt (Werte geschätzt).

| | | Referenzanlage ohne Vorverdampfung (Werte geschätzt) | Ausführungsbeispiel mit Vorverdampfung (Werte gemessen) |
|---|---|---|---|
| Brennstoff | | Heizöl EL (extraleicht) | Heizöl EL (extraleicht) |
| Heizwert | [MJ/kg] | 42,4 | 42,4 |
| Stickstoffgehalt | [mg/kg] | 124 | 124 |

| **Verdampfung:** | | | |
|---|---|---|---|
| Leistung | [KW] | entfällt | 100 |
| Betriebstemperatur | [K] | entfällt | 780 |
| Betriebsdruck | [bar] | entfällt | 30 |
| Wasser/Öl | [kg/kg] | entfällt | 0,5 |
| Luftzugabe | | entfällt | 0 |

| **Verbrennung:** | | | |
|---|---|---|---|
| Leistung | [KW] | 100 | 100 |
| Betriebstemperatur | [K] | 1800 | 1800 |
| Betriebsdruck | [bar] | 20 | 20 |
| Wasser/Öl | [kg/kg] | 1 | 0,5 |
| Luftzahl λ | | 2 | 2 |
| NOₓ | [ppm] | 42 | 11 |
| CO | [ppm] | 10 | 1 |
| UHC | [ppm] | 5 | 1 |

Schlussfolgernd daraus zeigt sich neben einer deutlichen Abnahme der NOₓ₋Werte auch eine Senkung des Anteils von Kohlenmonoxid und von unverbrannten Kohlenwasserstoffen im Abgas der Gasturbinenanlage 5.

In einem zweiten Ausführungsbeispiel wird stromauf des Verdampfungsreaktors 12 abgezweigte Verdichterluft 63 und mit dieser ein Anteil Sauerstoff in den überhitzten Wasserdampf 21 eingeführt. Dazu mündet eine Luftleitung 64 in die Zuleitung 20. Die eingesetzte Luftmenge beträgt etwa 5%, der für eine stöchiometrische Reaktion benötigten Menge. Durch die Zugabe einer solchen, relativ kleinen Luftmenge kommt es zu Teilreaktionen im Verdampfungsreaktor 12, wodurch dessen Temperaturniveau aufgrund zusätzlicher Wärmefreisetzung erhöht werden kann. Neben einer verbesserten Verdampfung des restlichen Brennöls 38 im Verdampfungsreaktor 12 wird dadurch auch die Kondensationsneigung des erzeugten Brennstoffdampfs 54 merklich verringert. Natürlich kann mit einer entsprechenden Regelung der Luftzufuhr die Temperatur im Verdampfungsreaktor 12 relativ schnell an einen eventuellen Lastwechsel der Gasturbinenanlage 5 angepasst werden. Dazu ist in der Luftleitung 64 ein Regelventil 65 angeordnet (Fig. 1).

In einem dritten Ausführungsbeispiel ist die Austrittsöffnung 40 der Zweistoffdüse 22 zum Verdampfungsreaktor 12 lavaldüsenförmig ausgebildet (Fig. 7). Dadurch wird die Eindüsgeschwindigkeit des Brennstoffdampf-Flüssigbrennstoff-Gemischs 61 in den Druckkörper 17 des Verdampfungsreaktors 12 weiter erhöht, so dass unmittelbar stromab der Austrittsöffnung 40 heftige Strömungsturbulenzen erzeugt werden. Dies hat eine verbesserte Vermischung und Verdampfung des Brennöls 38 zur Folge und verhindert zudem wirkungsvoll eine Tröpfchenablagerung in der Austrittsöffnung 40.

### Bezugszeichenliste

- 1: Verdichter
- 2: Brennkammer
- 3: Gasturbine
- 4: Generator
- 5: Gasturbinenanlage
- 6: Welle
- 7: Abgasleitung
- 8: Dampferzeuger, Abhitzekessel
- 9: Frischdampfleitung
- 10: Brenner, Doppelkegelbrenner
- 11: Verbindungsleitung
- 12: Verdampfungsreaktor
- 13: Absperrventil, erstes
- 14: Gasleitung, Erdgasleitung
- 15: Absperrventil, zweites
- 16: Verdränger
- 17: Druckkörper
- 18: Mantelrohr
- 19: Flüssigbrennstoffleitung
- 20: Zuleitung
- 21: erstes Wärmetauschmedium, Wasserdampf
- 22: Zweistoffdüse
- 23: erstes Befestigungselement, Flansch
- 24: zweites Befestigungselement
- 25: Drossel
- 26: Isolationsmantel
- 27: Anschlussstück
- 28: Innenkörper
- 29: Aussenmantel
- 30: Ringspalt
- 31: Flüssigbrennstoffkanal
- 32: Verteilkörper
- 33: Verteilbohrung
- 34: Isolierhülse, Keramikhülse
- 35: Isolierspalt
- 36: Ausnehmung
- 37: Absperrventil, drittes
- 38: Flüssigbrennstoff, Brennöl
- 39: Düsenkopf
- 40: Austrittsöffnung

- 41: Öffnungswinkel
- 42: Drallrille
- 43: Rezirkulationshülse
- 44: Leitkegel
- 45: Verdampferkanal
- 46: Rippe, von 17
- 47: Ringkanal
- 48: Öffnung
- 49: Zuführleitung
- 50: Abführleitung
- 51: zweites Wärmetauschmedium, Abgas
- 52: Absperrventil, viertes
- 53: Erdgas
- 54: Brennstoffdampf
- 55: Lufteintrittschlitz, tangential
- 56: Mischstrecke
- 57: Verbrennungsluft, komprimierte Umgebungsluft
- 58: Brenngemisch
- 59: Rauchgas
- 60: Kamin
- 61: Brennstoffdampf-Flüssigbrennstoff-Gemisch
- 62: Oberflächenschicht, Katalysator
- 63: Sauerstoff, Verdichterluft
- 64: Luftleitung
- 65: Regelventil

## Patentansprüche

1. Verfahren zum Betreiben der Brennkammer einer Gasturbinenanlage mit Flüssigbrennstoff einer Siedetemperatur ≤ 450 °C, bei dem der Flüssigbrennstoff (38) zunächst zu einem Brennstoffdampf (54) verdampft, letzterer in einer Mischstrecke (56) mit Verbrennungsluft (57) zu einem Brenngemisch (58) vermischt und dieses Brenngemisch (58) schliesslich gezündet wird, wobei die Verdampfung des Flüssigbrennstoffs (38) räumlich und zeitlich getrennt von der Vermischung des Brennstoffdampfs (54) mit der Verbrennungsluft (57) erfolgt, wobei der Flüssigbrennstoff (38) in einem separaten Verdampfungsreaktor (12), in zumindest zwei Schritten verdampft wird, wobei der Flüssigbrennstoff (38) zunächst im unmittelbaren Wärmetausch mit einem ersten Wärmetauschmedium (21) zu einem Brennstoffdampf-Flüssigbrennstoff-Gemisch (61) zerstäubt, dabei ein Teil des Flüssigbrennstoffs (38) schlagartig verdampft und danach der verbleibende Rest des Flüssigbrennstoffs (38) im mittelbaren Wärmetausch mit einem zweiten Wärmetauschmedium (51) verdampft wird, und wobei beim mittelbaren Wärmetausch eine Temperatur von ≥250°C eingestellt und zudem Sauerstoff (63) zugeführt wird und der Sauerstoff (63) in Form von Verdichterluft und noch vor dem unmittelbaren Wärmetausch in das erste Wärmetauschmedium (21) eingeführt und dazu eine Luftmenge von bis zu 10%, vorzugsweise 1-5%, der für eine stöchiometrische Reaktion benötigten Menge verwendet wird.

2. Verfahren nach Anspruch 1, wobei die Menge an zugeführter Verdichterluft (63) in Abhängigkeit vom Lastzustand der Gasturbinenanlage (5) geregelt wird.

3. Verfahren nach Anspruch 1, wobei die im mittelbaren Wärmetausch erfolgende Verdampfung des verbleibenden Rests des Flüssigbrennstoffs (38) im Beisein eines Katalysators (62) erfolgt, wobei vorzugsweise ein Katalysator (62) auf Nickelbasis eingesetzt wird.

4. Verfahren nach einem der Ansprüche 1 bis 3, wobei das erste Wärmetauschmedium (21) aus überhitztem Wasserdampf und das zweite Wärmetauschmedium (51) aus einem heissen Prozessgas der Gasturbinenanlage (5), vorzugsweise aus deren Abgas besteht.

5. Verfahren nach Anspruch 4, wobei das erste Wärmetauschmedium (21) von einem mit der Gasturbinenanlage (5) verbundenen Dampferzeuger (8) und das zweite Wärmetauschmedium (51) von einer Gasturbine (3) der Gasturbinenanlage (5) zugeführt wird.

6. Verfahren nach Anspruch 5, wobei das erste Wärmetauschmedium (21) in einem Massenverhältnis zum Flüssigbrennstoff (38) von 0,3 - 1:1, vorzugsweise in einem Verhältnis von 0,5:1 zugegeben wird, im Verdampfungsreaktor (12) ein Druck von 12 - 40 bar, vorzugsweise von 20 - 30 bar, sowie eine Temperatur von mehr als 100 °C über der Siedeendtemperatur des Flüssigbrennstoffs (38) aufrechterhalten wird und das entstandene Brennstoffdampf-Flüssigbrennstoff-Gemisch (61) eine Verweilzeit im Verdampfungsreaktor (12) von bis zu 30 s, zumindest jedoch von 1 s aufweist.

7. Verfahren nach Anspruch 6, wobei der Flüssigbrennstoff (38) zumindest annähernd senkrecht in das erste Wärmetauschmedium (21) eingeleitet, das dabei entstandene Brennstoffdampf-Flüssigbrennstoff-Gemisch (61) beschleunigt und mit lokaler Schallgeschwindigkeit in den Verdampfungsreaktor (12) eingedüst wird.

8. Verfahren nach Anspruch 7, wobei dem Brennstoffdampf-Flüssigbrennstoff-Gemisch (61) noch vor dem Eindüsen in den Verdampfungsreaktor (12) eine tangentiale Geschwindigkeitskomponente aufgeprägt wird.

9. Vorrichtung zur Durchführung des Verfahrens nach Anspruch 1, wobei
a) stromauf der Mischstrecke (56) der Brennkammer (2) ein mit letzterer über eine Verbindungsleitung (11) angeschlossener Verdampfungsreaktor (12) senkrecht angeordnet ist, welcher eingangsseitig eine sowohl mit einer Flüssigbrennstoffleitung (19) als auch mit einer Zuleitung (20) für ein erstes Wärmetauschmedium (21) verbundene Zweistoffdüse (22) aufnimmt,
b) der Verdampfungsreaktor (12) aus einem Druckkörper (17) sowie einem Mantelrohr (18) besteht und eine Zuführ- sowie eine Abführleitung (49, 50) für ein zweites Wärmetauschmedium (51) aufweist, wobei sowohl die Zuführ- als auch die Abführleitung (49, 50) mit einem zwischen dem Mantelrohr (18) und dem Druckkörper (17) ausgebildeten Ringkanal (47) verbunden sind.
c) die Zweistoffdüse (22) aus einem rohrartigen Innenkörper (28) sowie aus einem den Innenkörper (28) umschliessenden Aussenmantel (29) besteht und zwischen dem Innenkörper (28) sowie dem Aussenmantel (29) ein Ringspalt (30) ausgebildet ist,
d) der Innenkörper (28) einen zentralen Flüssigbrennstoffkanal (31) aufweist, stromab in einen Verteilkörper (32) übergeht und letzterer mehrere radial ausgerichtete, mit dem Flüssigbrennstoffkanal (31) verbundene sowie in den Ringspalt (30) mündende Verteilbohrungen (33) aufnimmt,
e) zwischen dem Anschlussstück (27) sowie dem Verteilkörper (32) eine den Innenkörper (28) umschliessende Isolierhülse (34) befestigt und letztere durch einen Isolierspalt (35) vom Innenkörper (28) getrennt ist,
f) der Aussenmantel (29) stromauf eine seitliche Ausnehmung (36) für die Zuleitung (20) und stromab einen Düsenkopf (39) mit einer zentralen, sich hohlkegelförmig erweiternden, mit dem Ringspalt (30) verbundenen Austrittsöffnung (40) zum Verdampfungsreaktor (12) aufweist.

10. Vorrichtung nach Anspruch 9, wobei die Verteilbohrungen (33) der Zweistoffdüse (22) zumindest annähernd senkrecht in den Ringspalt (30) münden, wobei letzterer sich stromab stetig verengend ausgebildet ist.

11. Vorrichtung nach Anspruch 10, wobei auf dem Verteilkörper (32) mehrere tangentiale Drallrillen (42) ausgebildet sind.

12. Vorrichtung nach Anspruch 11, wobei die Austrittsöffnung (40) der Zweistoffdüse (22) lavaldüsenförmig ausgebildet ist.

13. Vorrichtung nach Anspruch 9, wobei im Druckkörper (17) ein Verdränger (16) mit mehreren auf seinem Umfang angeordneten Verdampferkanälen (45) angeordnet ist, der Druckkörper (17) mehrere, nach aussen gerichtete Rippen (46) aufweist, der Ringkanal (47) zwischen dem Druckkörper (17), dessen Rippen (46) sowie dem Mantelrohr (18) angeordnet ist und die Verdampferkanäle (45) sowie der Ringkanal (47) im wesentlichen parallel zueinander verlaufen.

14. Vorrichtung nach Anspruch 13, wobei der Verdränger (16) eine katalytisch wirksame Oberflächenschicht (62) besitzt oder aus einem katalytisch wirksamen Werkstoff gefertigt ist.

15. Vorrichtung nach Anspruch 9 oder 13, wobei im Druckkörper (17) des Verdampfungsreaktors (12) eine zumindest den Einspritzbereich der Zweistoffdüse (22) abdeckende Rezirkulationshülse (43) angeordnet ist.

16. Vorrichtung nach Anspruch 9 oder 13, wobei in der Verbindungsleitung (11) von Brennkammer (2) und Verdampfungsreaktor (12) ein erstes Absperrventil (13) angeordnet ist, stromab des ersten Absperrventils (13) eine Gasleitung (14) in die Verbindungsleitung (11) mündet und die Gasleitung (14) ein zweites Absperrventil (15) aufweist.

17. Vorrichtung nach Anspruch 16, wobei stromauf des ersten Absperrventils (13) eine Drossel (25) zur Druckreduzierung des resultierenden Brennstoffdampfs (54) in der Verbindungsleitung (11) angeordnet ist.

18. Vorrichtung nach Anspruch 9 oder 13, wobei der Verdampfungsreaktor (12) mit einem Isolationsmantel (26) überzogen ist, welcher vorzugsweise aus einem Faserkeramik-Material besteht.

## Claims

1. Method for operating a gas turbine installation combustion chamber with liquid fuel having a boiling temperature less than or equal to 450°C, in which the liquid fuel (38) is first evaporated to form a fuel vapour (54), the latter is mixed with combustion air (57) in a mixing section (56) to form a combustion mixture (58) and this combustion mixture (58) is finally ignited, the evaporation of the liquid fuel (38) taking place separately in space and time from the mixing of the fuel vapour (54) with the combustion air (57), wherein the liquid fuel (38) is evaporated in at least two steps in a separate evaporative reactor (12), the liquid fuel (38) being first atomized to a fuel vapour/liquid fuel mixture (61) by direct heat exchange with a first heat exchange medium (21), a part of the liquid fuel (38) being instantaneously evaporated in this process and, subsequently, the remaining residue of the liquid fuel (38) being evaporated by indirect heat exchange with a second heat exchange medium (51), and wherein a temperature equal to or greater than 250°C is set during the indirect heat exchange and oxygen (63) is also added, and the oxygen (63) is introduced into the first heat exchange medium (21) in the form of compressor air and even before the direct heat exchange and, for this purpose, an air quantity of up to 10%, preferably between 1 and 5% of the quantity required for a stoichiometric combustion reaction, is employed.

2. Method according to Claim 1, wherein the quantity of compressor air (63) supplied is controlled as a function of the loading condition of the gas turbine installation (5).

3. Method according to Claim 1, wherein the evaporation of the remaining residue of the liquid fuel (38), which takes place by indirect heat exchange, takes place in the presence of a catalyser (62), a catalyser (62) based on nickel being preferably employed.

4. Method according to one of Claims 1 to 3, wherein the first heat exchange medium (21) consists of superheated steam and the second heat exchange medium (51) consists of a hot process gas from the gas turbine installation (5), preferably its exhaust gas.

5. Method according to Claim 4, wherein the first heat exchange medium (21) is supplied from a steam generator (8) connected to the gas turbine installation (5) and the second heat exchange medium (51) is supplied from a gas turbine (3) of the gas turbine installation (5).

6. Method according to Claim 5, wherein the first heat exchange medium (21) is supplied at a mass ratio relative to the liquid fuel (38) of between 0.3 and 1 to 1, preferably at a ratio of 0.5 to 1, a pressure of between 12 and 40 bar, preferably between 20 and 30 bar, and a temperature of more than 100°C above the final boiling temperature of the liquid fuel (38) is maintained in the evaporative reactor (12) and the resulting fuel vapour/liquid fuel mixture (61) has a residence time in the evaporative reactor (12) of up to 30 seconds but of at least 1 second.

7. Method according to Claim 6, wherein the liquid fuel (38) is introduced at least approximately at right angles into the first heat exchange medium (21) and the fuel vapour/liquid fuel mixture (61) resulting from this is accelerated and sprayed with local sonic velocity into the evaporative reactor (12).

8. Method according to Claim 7, wherein a tangential velocity component is imposed on the fuel vapour/liquid fuel mixture (61) even before it is sprayed into the evaporative reactor (12).

9. Appliance for carrying out the method according to Claim 1, wherein
a) an evaporative reactor (12) connected to the mixing section (56) of the combustion chamber (2) is arranged vertically upstream of this mixing section (56), which evaporative reactor (12) accommodates at its inlet end a dual-fluid nozzle (22) connected to both a liquid fuel line (19) and a supply line (20) for a first heat exchange medium (21),
b) the evaporative reactor (12) consists of a pressure body (17) and a shell tube (18) and has an inlet and an outlet line (49, 50) for a second heat exchange medium (51), both the inlet and the outlet line (49, 50) being connected to an annular duct (47) configured between the shell tube (18) and the pressure body (17),
c) the dual-fluid nozzle (22) consists of a tubular inner body (28) and an outer shell (29) surrounding the inner body (28) and an annular gap (30) is formed between the inner body (28) and the outer shell (29),
d) the inner body (28) has a central liquid fuel duct (31), merges into a distributor body (32) downstream and the latter accommodates a plurality of radially directed distributor orifices (33) connected to the liquid fuel duct (31) and opening into the annular gap (30),
e) an insulating sleeve (34), which surrounds the inner body (28) and is separated from it by an insulating gap (35), is fastened between the connecting piece (27) and the distributor body (32),
f) the outer shell (29) has a side recess (36) upstream for the supply line (20) and a nozzle head (39) downstream with a central outlet opening (40), which diverges as a hollow cone, is connected to the annular gap (30) and leads to the evaporative reactor (12).

10. Appliance according to Claim 9, wherein the distributor orifices (33) of the dual-fluid nozzle (22) open at least approximately at right angles into the annular gap (30), the latter continuously converging downstream.

11. Appliance according to Claim 10, wherein a plurality of tangential swirl grooves (42) are shaped out from the distributor body (32).

12. Appliance according to Claim 11, wherein the outlet opening (40) of the dual-fluid nozzle (22) is formed in the shape of a Laval nozzle.

13. Appliance according to Claim 9, wherein a displacement unit (16) with a plurality of evaporator ducts (45) arranged on its periphery is provided in the pressure body (17), the pressure body (17) has a plurality of outwardly directed ribs (46), the annular duct (47) is provided between the pressure body (17), its ribs (46) and the shell tube (18) and the evaporator ducts (45) and the annular duct (47) extend substantially parallel to one another.

14. Appliance according to Claim 13, wherein the displacement unit (16) has a catalytically effective surface layer (62) or is manufactured from a catalytically effective material.

15. Appliance according to Claim 9 or 13, wherein a recirculation sleeve (43) covering at least the injection region of the dual-fluid nozzle (22) is arranged in the pressure body (17) of the evaporative reactor (12).

16. Appliance according to Claim 9 or 13, wherein a first shut-off valve (13) is provided in the connecting line (11) between the combustion chamber (2) and the evaporative reactor (12) and, downstream of the first shut-off valve (13), a gas line (14) opens into the connecting line (11) and the gas line (14) has a second shut-off valve (15).

17. Appliance according to Claim 16, wherein a throttle (25) is provided upstream of the first shut-off valve (13) to reduce the pressure of the resulting fuel vapour (54) in the connecting line (11).

18. Appliance according to Claim 9 or 13, wherein the evaporative reactor (12) is coated with an insulating shell (26) which preferably consists of a fibrous ceramic material.

## Revendications

1. Procédé pour faire fonctionner la chambre de combustion d'une installation de turbine à gaz avec du combustible liquide à une température d'ébullition ≤450°C, dans lequel le combustible liquide (38) est d'abord vaporisé pour fournir une vapeur de combustible (54), cette dernière est mélangée dans une section de mélange (56) avec de l'air comburant (57) pour donner un mélange combustible (58) et ce mélange combustible (58) est finalement allumé, la vaporisation du combustible liquide (38) s'effectuant spatialement et séparément dans le temps du mélange de la vapeur de combustible (54) avec l'air comburant (57), le combustible liquide (38) étant vaporisé dans un réacteur de vaporisation séparé (12), en au moins deux étapes, le combustible liquide (38) étant pulvérisé d'abord en échange directe avec un premier fluide d'échange thermique (21) pour donner un mélange de vapeur de combustible et de combustible liquide (61), une partie du combustible liquide (38) étant alors vaporisée brutalement et ensuite le reste du combustible liquide (38) subsistant étant vaporisé en échange thermique indirect avec un deuxième fluide d'échange thermique (51), lors de l'échange thermique indirect, une température ≥ 250°C étant ajustée et en outre de l'oxygène (63) étant ajouté, et l'oxygène (63) étant introduit sous forme d'air de compresseur et encore avant l'échange thermique direct, dans le premier fluide d'échange thermique (21) et à cet effet une quantité d'air de jusqu'à 10%, de préférence de 1 à 5%, de la quantité nécessaire pour une réaction stoechiométrique, étant utilisée.

2. Procédé selon la revendication 1, dans lequel la quantité d'air de compresseur ajoutée (63) est régulée en fonction de l'état de charge de l'installation de turbine à gaz (5).

3. Procédé selon la revendication 1, dans lequel la vaporisation s'effectuant en échange thermique indirect du reste du combustible liquide subsistant (38) s'effectue en présence d'un catalyseur (62), un catalyseur (62) à base de nickel étant de préférence utilisé.

4. Procédé selon l'une quelconque des revendications 1 à 3, dans lequel le premier fluide d'échange thermique (21) se compose de vapeur d'eau surchauffée et le deuxième fluide d'échange thermique (51) se compose d'un gaz de processus chaud de l'installation de turbine à gaz (5), de préférence de son gaz d'échappement.

5. Procédé selon la revendication 4, dans lequel le premier fluide d'échange thermique (21) est acheminé par un générateur de vapeur (8) connecté à l'installation de turbine à gaz (5) et le deuxième fluide d'échange thermique (51) est acheminé par une turbine à gaz (3) de l'installation de turbine à gaz (5).

6. Procédé selon la revendication 5, dans lequel le premier fluide d'échange thermique (21) est ajouté dans un rapport de masse au combustible liquide (38) de 0,3 à 1:1, de préférence dans un rapport de 0,5:1, dans le réacteur de vaporisation (12), une pression de 12 à 40 bars, de préférence de 20 à 30 bars, ainsi qu'une température de plus de 100°C au-dessus de la température d'ébullition du combustible liquide (38) étant maintenues, et le mélange obtenu de vapeur de combustible et de combustible liquide (61) présentant un temps de séjour dans le réacteur de vaporisation (12) de jusqu'à 30 s, au moins toutefois de 1 s.

7. Procédé selon la revendication 6, dans lequel le combustible liquide (38) est introduit au moins approximativement perpendiculairement dans le premier fluide d'échange thermique (21), le mélange de vapeur de combustible et de combustible liquide ainsi formé (61) est accéléré et injecté à la vitesse locale du son dans le réacteur de vaporisation (12).

8. Procédé selon la revendication 7, dans lequel on imprime au mélange de vapeur de combustible et de combustible liquide (61) encore avant l'injection dans le réacteur de vaporisation (12) une composante de vitesse tangentielle.

9. Dispositif pour mettre en oeuvre le procédé selon la revendication 1, dans lequel
a) en amont de la section de mélange (56) de la chambre de combustion (2), un réacteur de vaporisation (12) raccordé à cette dernière par le biais d'une conduite de connexion (11) est disposé verticalement, lequel reçoit du côté de l'entrée une buse à deux substances (22) connectée à la fois à une conduite de combustible liquide (19) et à une conduite d'amenée (20) pour un premier fluide d'échange thermique (21),
b) le réacteur de vaporisation (12) se compose d'un corps de pression (17) ainsi que d'un tube périphérique (18) et présente une conduite d'amenée ainsi qu'une conduite d'évacuation (49, 50) pour un deuxième fluide d'échange thermique (51), la conduite d'amenée ainsi que la conduite d'évacuation (49, 50) étant toutes deux connectées à un canal annulaire (47) réalisé entre le tube périphérique (18) et le corps de pression (17),
c) la buse à deux substances (22) se compose d'un corps interne de type tubulaire (28) ainsi que d'une enveloppe extérieure (29) entourant le corps interne (28), et une fente annulaire (30) étant réalisée entre le corps interne (28) et l'enveloppe extérieure (29),
d) le corps interne (28) présente un canal de combustible liquide central (31), se prolonge en aval par un corps distributeur (32) et ce dernier reçoit plusieurs alésages de distribution (33) orientés radialement, connectés au canal de combustible liquide (31) et débouchant dans la fente annulaire (30),
e) entre la pièce de raccordement (27) ainsi que le corps de distribution (32) est fixée une douille d'isolation (34) entourant le corps interne (28) et cette dernière est séparée du corps interne (28) par une fente d'isolation (35),
f) l'enveloppe extérieure (29) présente en amont un évidement latéral (36) pour la conduite d'amenée (20) et en aval une tête de buse (39) avec une ouverture de sortie centrale (40) s'élargissant en forme de cône creux et connectée à la fente annulaire (30), allant vers le réacteur de vaporisation (12).

10. Dispositif selon la revendication 9, dans lequel les alésages de distribution (33) de la buse à deux substances (22) débouchent au moins approximativement perpendiculairement dans la fente annulaire (30), cette dernière étant réalisée avec un rétrécissement constant vers l'aval.

11. Dispositif selon la revendication 10, dans lequel plusieurs gorges de rotation tangentielle (42) sont réalisées sur le corps de distribution (32).

12. Dispositif selon la revendication 11, dans lequel l'ouverture de sortie (40) de la buse à deux substances (22) est réalisée en forme de buse Laval.

13. Dispositif selon la revendication 9, dans lequel, dans le corps de pression (17), est disposé un corps de déplacement (16) ayant plusieurs canaux de vaporisation (45) disposés sur sa périphérie, le corps de pression (17) présente plusieurs ailettes (46) orientées vers l'extérieur, le canal annulaire (47) est disposé entre le corps de pression (17), ses ailettes (46) ainsi que le tube périphérique (18), et les canaux de vaporisation (45) ainsi que le canal annulaire (47) s'étendent substantiellement parallèlement les uns aux autres.

14. Dispositif selon la revendication 13, dans lequel le corps de déplacement (16) possède une couche de surface à action catalytique (62) ou est fabriqué à partir d'un matériau à action catalytique.

15. Dispositif selon la revendication 9 ou 13, dans lequel, dans le corps de pression (17) du réacteur de vaporisation (12) est disposée une douille de recirculation (43) recouvrant au moins la région d'injection de la buse à deux substances (22).

16. Dispositif selon la revendication 9 ou 13, dans lequel, dans la conduite de connexion (11) de la chambre de combustion (2) et du réacteur de vaporisation (12) est disposée une première soupape d'arrêt (13), en aval de la première soupape d'arrêt (13) une conduite de gaz (14) débouche dans la conduite de connexion (11) et la conduite de gaz (14) présente une deuxième soupape d'arrêt (15).

17. Dispositif selon la revendication 16, dans lequel, en amont de la première soupape d'arrêt (13) est disposé un étranglement (25) pour réduire la pression de la vapeur de combustible résultant (54) dans la conduite de connexion (11).

18. Dispositif selon la revendication 9 ou 13, dans lequel le réacteur de vaporisation (12) est recouvert par une enveloppe d'isolation (26), qui se compose de préférence d'un matériau en fibrocéramique.
